# EUROPEAN PATENT APPLICATION

(11) **EP 3 248 775 A1**
(43) Date of publication of application: **29.11.2017**
(21) Application number: 17000889.0
(22) Date of filing: 23.05.2017
(51) Int. Cl.: B32B 17/10

(54) **LAMINATED GLASS**

(30) Priority: 25.05.2016 JP 2016103998; 11.05.2017 JP 2017094774
(71) Applicant: ASAHI GLASS COMPANY, LIMITED, Tokyo 100-8405 (JP)
(72) Inventor: Nakamura, Atsushi, Tokyo, 100-8405 (JP)
(74) Representative: Müller-Boré & Partner Patentanwälte PartG mbB

(57) **Abstract**

There is provided laminated glass superior in sound insulating property and visibility. The laminated glass includes: a pair of glass plates; and an intermediate film sandwiched between the pair of glass plates. The intermediate film has a transmitting region and a shielding region. The transmitting region has a skin layer having a glass transition point of 15°C or higher and a core layer having a glass transition point of lower than 15°C alternately laminated. The number of the core layers is two or more in the transmitting region. The shielding region is provided at peripheries of the pair of glass plates and has a visible light transmittance of 3% or less.

## Description

### TECHNICAL FIELD

Embodiments of the present invention relate to a laminated glass and, in particular, to the laminated glass superior in sound insulating property and visibility.

### BACKGROUND

The laminated glass including an intermediate film sandwiched between a pair of glass plates is superior in safety without scattering of fragments when broken, and therefore is widely used for window glass of a vehicle such as an automobile, a building and the like. In recent years, the laminated glass is used which has various functions imparted in addition to the safety. Among them, high sound insulating property is desired, and it is therefore attempted to increase the sound insulating property by using an intermediate film made by laminating resin films different in property.

For example, a sound insulating intermediate film made by laminating two kinds of layer (A) (where a thickness is 0.05 mm or more) and layer (B) each containing a specific polyvinyl acetal resin and a plasticizer in a laminated structure of layer (B)/layer (A)/layer (B) (refer to, for example, Patent Reference 1). The above laminated glass using the sound insulating intermediate film has sound insulating property at a certain level or higher in a wide temperature range.

Incidentally, a ceramic shielding layer in a band shape is sometimes provided at an outer peripheral portion in automobile window glass (refer to, for example, Patent Reference 2). The ceramic shielding layer is provided to prevent parts arranged inside the vehicle from deteriorating due to irradiation with ultraviolet and to make the parts arranged inside the vehicle invisible so as to improve design.

### PRIOR ART REFERENCE

### PATENT REFERENCE

Patent Reference 1: JP-A No. H5-104687
Patent Reference 2: JP-A No. 2005-213101

### SUMMARY OF THE INVENTION

### PROBLEMS TO BE SOLVED BY THE INVENTION

However, when the ceramic shielding layer is provided in the laminated glass, a transmitted image is sometimes viewed distorted near the boundary between a portion where the ceramic shielding layer is provided and a portion where the ceramic shielding layer is not provided. Such distortion of the transmitted image is more likely to occur, in particular, in the laminated glass which is increased in sound insulating property.

The present invention has been made from the above viewpoints, and an object is to provide laminated glass suppressed in distortion of a transmitted image and superior in sound insulating property and visibility.

### MEANS FOR SOLVING THE PROBLEMS

A laminated glass of the present invention includes: a pair of glass plates; and an intermediate film sandwiched between the pair of glass plates. The intermediate film has a transmitting region and a shielding region. The transmitting region has a skin layer having a glass transition point of 15°C or higher and a core layer having a glass transition point of lower than 15°C alternately laminated. The number of the core layers is two or more in the transmitting region. The shielding region is provided at peripheries of the pair of glass plates and has a visible light transmittance of 3% or less.

### EFFECT OF THE INVENTION

According to the present invention, the laminated glass superior in sound insulating property and visibility can be provided.

### BRIEF DESCRIPTION OF THE DRAWINGS

[Fig. 1] is a front view illustrating a laminated glass in a first embodiment.
[Fig. 2] is a cross-sectional view taken along a line X-X of the laminated glass illustrated in Fig. 1.
[Fig. 3] is a cross-sectional view illustrating a first modification example of the laminated glass in the first embodiment.
[Fig. 4] is a cross-sectional view illustrating a second modification example of the laminated glass in the first embodiment.
[Fig. 5] is a cross-sectional view illustrating laminated glass in a second embodiment.
[Fig. 6] is a front view illustrating laminated glass in a third embodiment.
[Fig. 7] is a cross-sectional view taken along a line Y-Y of the laminated glass illustrated in Fig. 6.
[Fig. 8] is a view explaining an evaluation method of distortion of a transmitted image in an example.
[Fig. 9] is another view explaining the evaluation method of the distortion of the transmitted image in the example.

### MODES FOR CARRYING OUT THE INVENTION

Hereinafter, embodiments of the present invention will be described. It should be noted that the present invention is not limited to these embodiments, and these embodiments may be changed or modified without departing from the spirit and scope of the present invention.

A laminated glass in the embodiments includes a pair of glass plates and an intermediate film sandwiched between the pair of glass plates. The intermediate film includes a transmitting region and a shielding region. The transmitting region has a skin layer having a glass transition point of 15°C or higher and a core layer having a glass transition point of lower than 15°C alternately laminated and the number of the core layers is two or more in the transmitting region. The shielding region is provided at peripheries of the pair of glass plates and has a visible light transmittance of 3% or less. Note that the number of the core layers in the transmitting region is preferably three or more and five or less. Besides, the transmitting region preferably has a visible light transmittance of 70% or more.

The glass transition point in this specification means a peak temperature of tan δ of a specimen measured by the dynamic viscoelasticity test in which a temperature dependency of the tan δ of the specimen (loss elastic modulus / storage elastic modulus) is measured under a condition at the frequency of 1 Hz, a dynamic shearing strain of 0.015 %, a temperature elevation rate: 3°C / minute, and a measuring temperature range: -40°C to 80°C.

The tan δ can be measured by, for example, preparing a specimen formed in a disc shape with the thickness d = 0.6 mm and the diameter of 12 mm to allow the specimen to undergo a dynamic viscoelasticity measuring machine using a measuring jig: parallel plate (diameter of 12 mm) under the above mentioned conditions. As the dynamic viscoelasticity measuring machine, for example, a rotational type Rheometer MCR 301 (brand name), manufactured by Anton Paar GmbH, can be used.

The visible light transmittance is the visible light transmittance obtained in compliance with JIS R3212 (1998).

According to the laminated glass in the embodiments, the following effects can be obtained. Specifically, the transmitting region of the intermediate film has a predetermined laminated structure, whereby vibrational energy of sound causes large shear deformation energy at a plurality of places, and the shear deformation energy is emitted as thermal energy, so that superior sound insulating property can be obtained. Further, the intermediate film has the shielding region having the predetermined visible light transmittance and thereby makes it possible to omit the conventional ceramic shielding layer to suppress the distortion of the transmitted image, thereby improving the visibility.

### (First embodiment)

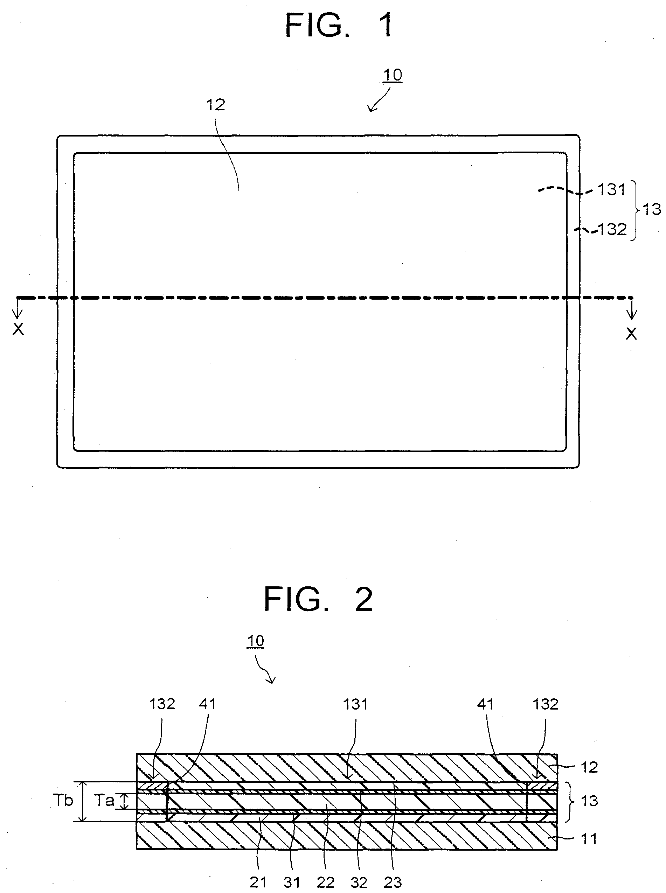

Fig. 1 is a front view illustrating a laminated glass in a first embodiment, and Fig. 2 is a cross-sectional view taken along a line X-X of the laminated glass illustrated in Fig. 1.

A laminated glass 10 has a pair of glass plates 11, 12 and an intermediate film 13 sandwiched between the pair of glass plates 11 and 12. The intermediate film 13 is formed to have substantially the same shape and dimensions as those of the pair of glass plates 11, 12. Note that "substantially the same shape and dimensions" means having the same shape and the same dimensions as viewed by people. In other cases, "substantially" also indicates the same meaning as above.

Hereinafter, components of the laminated glass 10 will be described.

### [Glass plate]

The thicknesses of the glass plates 11 and 12 are generally 0.1 to 10 mm though different depending on the composition thereof, the composition of the intermediate film, and the use of the laminated glass 10. Note that in order to set the surface density of the laminated glass 10 to a preferably range, the thicknesses of the glass plates 11 and 12 are preferably 0.3 to 2.5 mm.

The thicknesses of the glass plates 11 and 12 may be the same as or different from each other. In the case where the thicknesses are different, it is preferable that the thickness of the glass plate located inside, for example, a vehicle-interior side when it is window glass of an automobile, or on the indoor side when it is window glass of a building, is smaller than the thickness of the glass plate located outside.

The thickness of the glass plate located inside of the glass plates 11 and 12 is preferably 0.5 to 1.6 mm, and more preferably 0.7 to 1.5 mm. The thickness of the glass plate located outside is preferably 1.3 mm or more for better durability against a flipped stone. The difference in thickness between them is preferably 0.3 to 1.5 mm, and more preferably 0.5 to 1.3 mm. The thickness of the glass plate located outside is preferably 1.6 to 2.5 mm and more preferably 1.7 to 2.1 mm. If the thicknesses of the glass plates are thin, because the distortion of the transmitted image becomes easier to occur near the portion where the ceramic shielding layer is provided, the effect of the present invention is more developed. Therefore the total thickness of the glass plate 11 and the glass plate 12 is preferably 4.1 mm or less, more preferably 3.7 mm or less, furthermore preferably 3.3 mm or less, and particularly preferably 3.1 mm or less.

The glass plates 11 and 12 can be composed of inorganic glass or organic glass (resin).

Examples of the inorganic glass include ordinary soda lime glass (also referred to as soda lime silicate glass), aluminosilicate glass, borosilicate glass, non-alkali glass, quartz glass and the like. Among them, soda lime glass is particularly preferable. As the inorganic glass, for example, float plate glass formed by a float method or the like can be exemplified. As the inorganic glass, the one subjected to reinforcing process such as air-cooling tempering or chemical strengthening can be used.

Examples of the organic glass (resin) include a polycarbonate resin, a polystyrene resin, an aromatic polyester resin, an acrylic resin, a polyester resin, a polyarylate resin, a polycondensation product of halogenated bisphenol A and ethylene glycol, an acrylic urethane resin, a halogenated aryl group-containing acrylic resin and the like. Among them, the polycarbonate resins such as an aromatic polycarbonate resin, and the acrylic resin such as a polymethyl methacrylate-based acrylic resin are preferable, and the polycarbonate resin is more preferable. Further, among the polycarbonate resins, a bisphenol A-based polycarbonate resin is particularly preferable. Note that two or more kinds of the above-described resins may be used in combination.

The glass may contain an infrared absorbent, an ultraviolet absorbent and so on. Examples of the glass include green glass, ultraviolet-absorbing green glass (UV green glass) and the like. Note that the UV green glass contains 68 mass% or more and 74 mass% or less of SiO₂, 0.3 mass% or more and 1.0 mass% or less of Fe₂O₃, and 0.05 mass% or more and 0.5 mass% or less of FeO, and has an ultraviolet transmittance for a wavelength of 350 nm of 1.5 % or less and a minimum value of a transmittance in a region of 550 nm or more and 1700 nm or less.

The glass only needs to be transparent and may be colorless or colored. Besides, the glass may be made by laminating two or more layers. Though depending on the application place, the inorganic glass is preferable.

Though the materials of the glass plates 11 and 12 may be the same or different and are preferably the same. The shapes of the glass plates 11 and 12 may be flat or may entirely or partially have a curvature. The glass plates 11 and 12 may have a coating that imparts a water repellent function, a hydrophilic function, an antifogging function and the like, on a surface exposed to the atmosphere. Further, the facing surfaces of the glass plates 11 and 12 may have a coating normally including a metal layer such as a low emissivity coating, an infrared shielding coating, a conductive coating or the like.

### [Intermediate film]

The intermediate film 13 bonds the glass plates 11 and 12. The intermediate film 13 has, for example, a transmitting region 131 arranged near the center in a planar direction of the pair of glass plates 11 and 12 and a shielding region 132 provided at peripheries thereof. The shielding region 132 is provided, for example, in a frame shape in a manner to surround the transmitting region 131.

### (Transmitting region)

The transmitting region 131 has, for example, five layers of a skin layer 21, a core layer 31, a skin layer 22, a core layer 32, and a skin layer 23, in order from the glass plate 11 side. Note that each of the skin layers 21, 22, 23 and the core layers 31, 32 may be in a single-layer structure or a multilayer structure.

Each glass transition point of the skin layers 21, 22, 23 is 15°C or higher and each the glass transition point of the core layers 31, 32 is lower than 15°C. The skin layers 21, 22, 23 and the core layers 31, 32 each generally contains a thermoplastic resin. The kind of the thermoplastic resin is not particularly limited, and a thermoplastic resin can be appropriately selected in consideration of the glass transition point from publicly-known thermoplastic resins constituting the intermediate film. Hereinafter, the glass transition point of the skin layer 21, 22, 23 is sometimes indicated as Tgs, and the glass transition point of the core layer 31, 32 is sometimes indicated as Tgc.

When Tgs is 15°C or higher, superior sound insulating property can be obtained. Tgs is preferably 20°C or higher, and more preferable 25°C or higher. Tgs is preferably 50°C or lower and more preferably 40°C or lower from the viewpoint of penetration resistance.

When Tgc is lower than 15°C, superior sound insulating property can be obtained. Tgc is preferably 10°C or lower, and more preferable 8°C or lower. Tgc is preferably -10°C or higher and more preferably 0°C or higher from the viewpoint of shape retention of the core layers 31, 32.

From the viewpoint of increasing the sound insulating property, a value obtained by subtracting Tgc from Tgs is preferably 10 to 40°C, and more preferably 20 to 35°C.

Examples of the thermoplastic resin include a polyvinyl acetal resin such as a polyvinyl butyral resin (PVB), a polyvinyl chloride resin (PVC), a saturated polyester resin, a polyurethane resin, an ethylene-vinyl acetate copolymer resin (EVA), an ethylene-ethyl acrylate copolymer resin, a cycloolefin polymer (COP) and the like. The glass transition point of the thermoplastic resin can be adjusted, for example, by the amount of a plasticizer. The thermoplastic resins may be used independently or two or more kinds of them may be used in combination.

The thermoplastic resin is selected in consideration of balance among various properties such as transparency, weather resistance, adhesive strength, penetration resistance, impact energy absorbency, moisture resistance, heat insulating property and the like in addition to the glass transition point. From the above viewpoint, PVB, EVA, the polyurethane resin and the like are preferable for the skin layers 21, 22, 23. PVB, EVA, the polyurethane resin and the like are preferable for the core layers 31, 32.

The skin layers 21, 22, 23 may be the same or different in Tgs and are preferably the same. Further, the kinds of the thermoplastic resins constituting the skin layers 21, 22, 23 may also be the same or different and preferably the same. The kinds of the thermoplastic resins constituting the skin layers 21, 22, 23 are more preferably the same as the kind of the thermoplastic resins constituting the core layers 31, 32.

The core layers 31, 32 may be the same or different in Tgc and are preferably the same. Further, the kinds of the thermoplastic resins constituting the core layers 31, 32 may be the same or different and preferably the same.

The skin layer 21 is preferably arranged between the glass plate 11 and the core layer 31, and the skin layer 23 is preferably arranged between the glass plate 12 and the core layer 32. Such a configuration improves the productivity of the laminated glass 10.

A thickness (Ta) is preferably 0.45 mm or more. Here, when the transmitting region 131 has the two core layers 31, 32 as illustrated in Fig. 2, the thickness (Ta) means the thickness between the core layers 31 and 32, specifically, the thickness of the skin layer 22. Besides, when the transmitting region 131 has three or more core layers, the thickness (Ta) means the thickness between a pair of core layers closest to the pair of glass plates.

When the thickness (Ta) is 0.45 mm or more, the transmitting region 131 undergoes sufficient shear deformation, thus improving the sound insulating property. The thickness (Ta) is more preferably 0.50 mm or more. The upper limit of the thickness (Ta) is not particularly limited, and is preferably 4.0 mm or less, and more preferably 3.0 mm or less from the viewpoint of reduction in weight.

A surface density (p) is preferably 0.5 kg/m² or more. Here, when the two core layers 31, 32 are provided as illustrated in Fig. 2, the surface density (p) means the surface density of whole layers arranged between the two core layers 31 and 32, specifically, the surface density of the skin layer 22. Besides, when three or more core layers are provided, the surface density (p) means the surface density of whole layers arranged between the pair of core layers closest to the pair of glass plates.

When the surface density (p) is 0.5 kg/m² or more, the transmitting region 131 undergoes sufficient shear deformation, thus improving the sound insulating property. The surface density (p) is more preferably 0.55 kg/m² or more, and furthermore preferably 0.6 kg/m² or more. The upper limit of the surface density (p) is not particularly limited, and is preferably 3.3 kg/m² or less, more preferably 2.0 kg/m² or less, and furthermore preferably 1.3 kg/m² or less from the viewpoint of reduction in weight.

A thickness (Tb) is preferably 1.53 mm or more. Here, the thickness (Tb) is the thickness of the whole transmitting region 131 and is the total of the thicknesses of the skin layers 21, 22, 23 and the core layers 31, 32. When the thickness (Tb) is 1.53 mm or more, the sound insulating property improves. The thickness (Tb) is more preferably 2.0 mm or more. The upper limit of the thickness (Tb) is not particularly limited, and is preferably 4.0 mm or less from the viewpoint of reduction in weight.

The thicknesses of the skin layers 21, 22, 23 are not particularly limited. Each of the thicknesses is preferably 0.15 to 1.1 mm, and more preferably 0.2 to 0.76 mm from the viewpoint of the sound insulating property, reduction in weight, thickness (Ta), and thickness (Tb). The thicknesses of the skin layers 21, 22, 23 may be the same as or different from each other.

The thicknesses of the core layers 31, 32 are not particularly limited. Each of the thicknesses is preferably 0.05 to 0.2 mm, and more preferably 0.07 to 0.15 mm from the viewpoint of the sound insulating property, reduction in weight, thickness (Ta), and thickness (Tb). The thicknesses of the core layers 31, 32 may be the same as or different from each other.

The transmitting region 131 preferably has a storage modulus G' measured at a frequency of 1 Hz and a temperature of 20°C of 5.0 × 10⁴ Pa or more, and more preferably 1.0 × 10⁵ Pa or more. The storage modulus G' is an index indicating rigidity, and when the storage modulus G' is within the above range, sufficient rigidity can be secured.

The upper limit of the storage modulus G' is not particularly limited. However, when the storage modulus G' becomes high, the sound insulating property may be deteriorated. Besides, when the storage modulus G' is too high, the productivity may decrease such as needing a specific device in process of cutting or the like. Further, the transmitting region 131 becomes brittle and decreases in penetration resistance. Considering such points, the storage modulus G' is preferably 1.0 × 10⁷ Pa or less.

Note that the storage modulus G' in this specification is the storage modulus in the dynamic viscoelasticity test measured under a condition at the frequency of 1 Hz, the temperature of 20°C, and the dynamic shearing strain of 0.015 % by a shearing method using, for example, Rheometer MCR301 manufactured by Anton Paar GmbH.

The skin layers 21, 22, 23 and the core layers 31 and 32 each contain a thermoplastic resin as a main component. Further, the skin layers 21, 22, 23 and the core layers 31 and 32 each may contain one kind or two or more kinds of various additives such as an infrared absorbent, an ultraviolet absorbent, a fluorescent, an adhesion regulator, a coupling agent, a surfactant, an antioxidant, a heat stabilizer, a light stabilizer, a dehydrating agent, a de-foaming agent, an antistatic agent, a flame retarder and the like.

### (Shielding region)

The shielding region 132 is formed at the peripheries of the pair of glass plates 11, 12, for example, the outer periphery of the transmitting region 131, and has a visible light transmittance of 3% or less. If the shielding region 132 has the visible light transmittance of 3% or less, when the laminated glass 10 is used, for example, as automobile window glass, the deterioration of parts arranged inside the vehicle due to irradiation with ultraviolet is suppressed, and the parts arranged inside the vehicle are made invisible at that region, leading to improved design. Note that the shielding region 132 formed at the peripheries of the pair of glass plates 11, 12 also includes a portion formed at a portion where the ceramic shielding layer has been conventionally formed including a portion where a camera and a sensor are attached.

The shielding region 132 is generally provided in a region where the conventional ceramic shielding layer has been provided. Providing the shielding region 132 in such a region makes it possible to omit the conventional ceramic shielding layer so as to suppress the distortion of the transmitted image, thereby improving the visibility.

The shielding region 132 is formed, for example, by providing a colored layer 41 bringing the visible light transmittance to 3% or less, at the region of the intermediate film 13. For example, the shielding region 132 illustrated is formed by replacing the skin layer 23 in the transmitting region 131 with the colored layer 41 and making the other portion in the same laminated structure as that of the transmitting region 131. Besides, though not illustrated, the shielding region 132 may be formed by printing in a dark color on the surface of the skin layer 21, 22 or 23. Alternatively, the shielding region 132 may be formed by sandwiching a film in a dark color between the intermediate film 13 and the glass plate 11 or the glass plate 12, or by sandwiching a film in a dark color in the laminated structure of the intermediate film 13 or the like.

The layer to be replaced with the colored layer 41 in the shielding region 132 among the layers constituting the transmitting region 131 is not limited to the skin layer 23. The layer to be replaced with the colored layer 41 may be any of the layers in the transmitting region 131. Besides, the layer to be replaced with the colored layer 41 may be a part or all of the layers in the transmitting region 131. More specifically, in the case of the illustrated structure, arbitrary one layer or two or more layers selected from among the skin layers 21, 22, 23 and the core layers 31, 32 can be replaced with the colored layer 41.

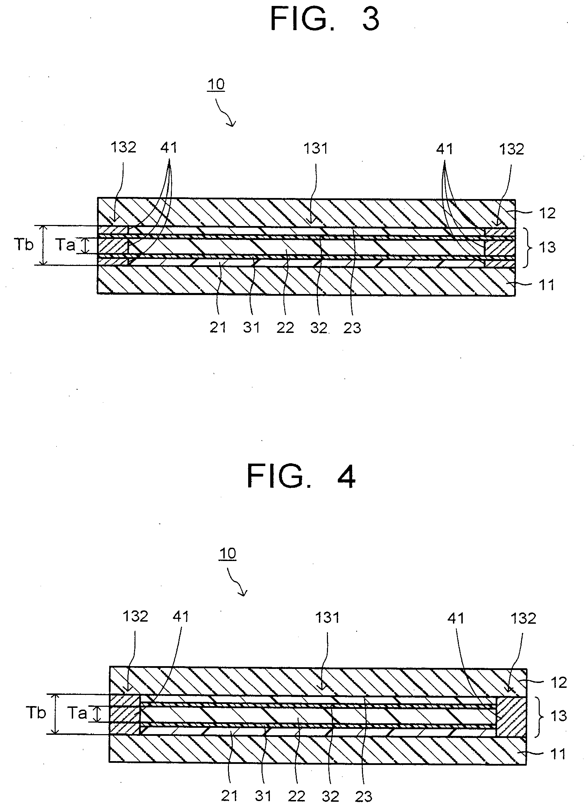

For example, as illustrated in Fig. 3, only the skin layers 21, 22, 23 in the transmitting region 131 may be replaced with the colored layers 41 to form the shielding region 132. Besides, though not illustrated, only the core layers 31, 32 may be replaced with the colored layers 41 to form the shielding region 132. Besides, as illustrated in Fig. 4, all of the skin layers 21, 22, 23 and the core layers 31, 32 may be replaced with the colored layer 41 to form the shielding region 132.

The position, shape and so on of the shielding region 132 can be appropriately selected. For example, when the laminated glass 10 is roof glass used for a ceiling part of an automobile, the shielding region 132 is formed in a frame shape having a width of about 10 to 100 mm. Besides, when the laminated glass 10 is used for side glass of the automobile, the shielding region 132 is formed in a band shape having a width of about 30 to 200 mm. Note that, for example, when the plurality of colored layers 41 are laminated as illustrated in Fig. 3, the widths of the colored layers 41 may be the same as or different from each other. The widths of the colored layers 41 are appropriately selected depending on the use of the laminated glass 10.

The colored layer 41 contains, for example, a thermoplastic resin and a coloring agent for adjusting the visible light transmittance. The colored layer 41 can further contain a plasticizer for adjusting the glass transition point.

Examples of the thermoplastic resin constituting the colored layer 41 include a polyvinyl acetal resin such as a polyvinyl butyral resin (PVB), a polyvinyl chloride resin (PVC), a saturated polyester resin, a polyurethane resin, an ethylene-vinyl acetate copolymer resin (EVA), an ethylene-ethyl acrylate copolymer resin, a cycloolefin polymer (COP) and the like. The thermoplastic resins may be used independently or two or more kinds of them may be used in combination.

The thermoplastic resin constituting the colored layer 41 is selected in consideration of balance among various properties such as transparency, weather resistance, adhesive strength, penetration resistance, impact energy absorbency, moisture resistance, heat insulating property and the like in addition to the glass transition point. From the above viewpoint, PVB, EVA, a polyurethane resin and the like are preferable as the thermoplastic resin constituting the colored layer 41.

The coloring agent is not particularly limited as long as it decreases the visible light transmittance, and its examples include a dye, an inorganic pigment, an organic pigment and the like. Among them, the inorganic pigment or the organic pigment is preferable because of less possibility of color fading due to long-term use, and the inorganic pigment is preferable because it is superior in light resistance.

Examples of the organic pigment include a black pigment such as aniline black, a red pigment such as alizarin lake and the like. Examples of the inorganic pigment include a carbon-based pigment, a metal oxide-based pigment and the like. Examples of the inorganic pigment include: black pigments such as carbon black, ivory black, Mars black, peach black, lampblack, magnetite type triiron tetraoxide and the like; brown pigments such as umber, burnt umber, yellow ocher, Vandyke brown, sienna, burnt sienna and the like; red pigments such as iron red, molybdenum red, cadmium red and the like; orange pigments such as chrome orange, chrome vermilion and the like; blue pigments such as ultramarine blue, iron blue, cobalt blue, cerulean blue and the like; green pigments such as chromium oxide, viridian, emerald green, cobalt green and the like; yellow pigments such as chrome yellow, cadmium yellow, yellow iron oxide, titanium yellow and the like; violet pigments such as manganese violet, mineral violet and the like. One kind of the coloring agents can be used or a combination of two or more kinds of them can be used.

The compounding amount of the coloring agent is set to bring the visible light transmittance of the shielding region 132 to 3% or less. For example, when only one colored layer 41 is provided, the compounding amount is set such that the visible light transmittance of the shielding region 132 is brought to 3% or less only by the one colored layer 41. Besides, when a plurality of colored layers 41 are provided, the compounding amount is set such that the visible light transmittance of the shielding region 132 is brought to 3% or less by the plurality of colored layers 41 as a whole. Note that when the plurality of colored layers 41 are provided, the compounding amounts in the colored layers 41 may be the same as or different from each other.

The colored layer 41 can further contain one kind or two or more kinds of various additives such as an infrared absorbent, an ultraviolet absorbent, a fluorescent, an adhesion regulator, a coupling agent, a surfactant, an antioxidant, a heat stabilizer, a light stabilizer, a dehydrating agent, a de-foaming agent, an antistatic agent, a flame retarder and the like.

The colored layer 41 preferably has a glass transition point close to that of the layer to be replaced therewith. For example, the colored layers 41 replacing the skin layers 21, 22 and 23 preferably has a glass transition point of 15°C or higher, more preferably 20°C or higher, and furthermore preferably 25°C or higher. The colored layers 41 replacing the core layers 31 and 32 preferably has a glass transition point of lower than 15°C, more preferably 10°C or lower, and furthermore preferably 8°C or lower. In particular, the glass transition point of the colored layer 41 is preferably substantially the same as the glass transition point of the layer to be replaced with the colored layer 41. Note that when one or more skin layers and one or more core layers are replaced with the same colored layer 41, the glass transition point of the colored layer 41 may be 15°C or higher or may be lower than 15°C.

The shielding region 132 preferably has a storage modulus G' measured at a frequency of 1 Hz and a temperature of 20°C of 5.0 × 10⁴ Pa or more, and more preferably 1.0 × 10⁵ Pa or more. The storage modulus G' is an index indicating rigidity, and when the storage modulus G' is within the above range, sufficient rigidity can be secured.

The upper limit of the storage modulus G' of the shielding region 132 is not particularly limited. However, when the storage modulus G' becomes high, the sound insulating property may be deteriorated. Besides, when the storage modulus G' is too high, the productivity may decrease such as needing a specific device in process of cutting or the like. Further, the shielding region 132 becomes brittle and decreases in penetration resistance. Considering such points, the storage modulus G' of the shielding region 132 is preferably 1.0 × 10⁷ Pa or less.

The ratio of the mass of the intermediate film 13 to the total mass of the pair of glass plates 11, 12 and the intermediate film 13 is preferably 14 mass% or more, more preferably 15 mass% or more, and furthermore preferably 17 mass% or more from the viewpoint of sound insulating property and reduction in weight. The ratio is preferably 50 mass% or less, and more preferably 40 mass% or less from the viewpoint of keeping desired strength. Hereinafter, the above ratio is referred to as a "film ratio".

The intermediate film 13 can be manufactured, for example, by lamination of resin sheets. In the case of the intermediate film 13 illustrated in Fig. 2, a portion excluding the colored layer 41 of the shielding region 132 is formed first, and then the colored layer 41 of the shielding region 132 is formed to thereby form the intermediate film 13.

Specifically, the resin sheets for forming the skin layer 21, the core layer 31, the skin layer 22, the core layer 32, the skin layer 23, and the colored layer 41 are manufactured. These resin sheets are made in a continuous size enabling formation of both of the transmitting region 131 and the shielding region 132 at the same time. On the other hand, the resin sheet for forming the skin layer 23 is made in a size for forming only the transmitting region 131. Besides, the resin sheet for forming the colored layer 41 is made in a size for forming only the shielding region 132.

Each of the resin sheets can be manufactured by forming a resin composition having a composition suitable for each layer into a sheet shape. The forming condition can be appropriately selected depending on the kind of the thermoplastic resin. The resin sheets can be made into the intermediate film 13 by laminating them in a predetermined order and heating them under pressure. Note that the intermediate film 13 may be partially or entirely formed by coextrusion.

Between the pair of glass plates 11 and 12, a functional film other than the intermediate film 13 may be provided. The functional film is arranged, for example, between layers constituting the intermediate film 13. Examples of the functional film include an infrared cut film and so on.

As the infrared cut film, for example, the one in which an infrared reflective film having a film thickness of about 100 to 500 nm is provided on a supporting film such as a PET film having a thickness of about 25 to 200 µm or the like, can be exemplified. Examples of the infrared reflective film include a dielectric multi layered film, a liquid crystal orientation film, an infrared reflective material containing coating film, a single layered or multi layered infrared reflective film which includes a metal film or the like. As the infrared cut film, a dielectric multilayer film made by laminating resin films different in refractive index and having a total film thickness of about 25 to 200 µm and the like can be exemplified.

Note that when the functional film exists in the measuring range of the thickness (Ta), the thickness (Ta) includes the thickness of the functional film. Besides, when the functional film exists in the measuring range of the surface density (p), the surface density (p) includes that of the functional film. Further, the surface density of the laminated glass also includes that of the functional film. On the other hand, the thickness (Tb) and the film ratio do not include those of the functional film.

The laminated glass 10 may have a ceramic shielding layer. Such a ceramic shielding layer is provided as needed and in a range of not decreasing the visibility. For example, the ceramic shielding layer is provided by a publicly-known method on one of the glass plates selected from the pair of glass plates 11 and 12. The formation place of the ceramic shielding layer is appropriately selected according to the use application. Note that the surface density and the film ratio of the laminated glass 10 do not include those of the ceramic shielding layer. At a place which attracts attention of occupants such as the vicinity of a center of the peripheral portion of the laminated glass 10, the shielding region of the present invention may be provided, and the ceramic shielding layer may be provided at the other place. Because the distortion of the transmitted image is likely to occur, the laminated glass 10 preferably has no ceramic shielding layer.

The intermediate film 13 may include the so-called shade band layer reducing glare of the occupants of the vehicle by sunlight. The shade band layer is provided at a peripheral portion along with an edge that becomes an upper edge when the laminated glass 10 is attached to the vehicle.

The laminated glass 10 preferably has the following characteristics.

The surface density of the laminated glass 10 is preferably 13.5 kg/m² or less, more preferably 12 kg/m² or less, and furthermore preferably 11 kg/m² or less. When the surface density of the laminated glass 10 is within the above range, the reduction in weight can be achieved. The surface density of the laminated glass 10 is preferably 8 kg/m² or more, and more preferably 9 kg/m² or more from the viewpoint of keeping the desired strength.

The visible light transmittance of a portion of the laminated glass 10 where the shielding region 132 is provided, namely, the visible light transmittance of a portion of the pair of glass plates 11 and 12 combined with the shielding region 132 of the intermediate film 13 is preferably 3% or less. With the visible light transmittance of 3% or less in this portion, when the laminated glass 10 is used, for example, as automobile window glass, the deterioration of parts arranged inside the vehicle due to ultraviolet is suppressed, and the parts arranged inside the vehicle are made invisible, leading to improved design.

A loss factor at a primary resonance point of the laminated glass 10 is preferably 0.4 or more. Here, the loss factor at the primary resonance point is measured in a frequency domain of 0 to 10000 Hz under the condition of a temperature of 20°C. The loss factor at the primary resonance point can be measured by the center excitation method compliant with ISO_PAS_16940. As a measurement apparatus for the loss factor by the center excitation method, for example, central exciting method measurement systems (MA-5500, DS-2000) manufactured by ONO SOKKI Co., Ltd. can be exemplified.

The frequency domain of the primary resonance point is about 0 to 300 Hz. When the loss factor at the primary resonance point is 0.4 or more, it is possible to sufficiently insulate, for example, sound in a relatively low frequency domain, such as engine sound of an automobile, vibration sound of tires and the like. Further, when the loss factor at the primary resonance point is 0.4 or more, the loss factors at higher-order resonance points such as a secondary resonance point to a seventh resonance point are likely to be 0.4 or more, thus making it possible to efficiently insulate sound from a low frequency domain to a high frequency domain.

The loss factor at the primary resonance point is more preferably 0.42 or more, and furthermore preferably 0.45 or more. Further, both of the loss factors at the primary resonance point and at the secondary resonance point are preferably 0.5 or more. Note that, for example, in laminated glass in a curved shape, the loss factor is measured by fabricating laminated glass using flat glass plates to have the configuration equivalent to that of the laminated glass in the curved shape.

A three point bend rigidity of the laminated glass 10 is preferably 100 N/mm or more. The three point bend rigidity is rigidity obtained by a three point bend test, and can be measured, for example, by a compression and tensile testing machine. The three point bend rigidity is particularly preferably 120 N/mm or more. The three point bend rigidity of 100 N/mm or more is preferable because it is the rigidity at a level not inhibiting opening and closing the window glass during high-speed running of a vehicle.

A sound transmission loss of the laminated glass 10 in a coincidence region measured in conformity to SAE J1400 is preferably 35 dB or more, and more preferably 42 dB or more. When the sound transmission loss is 35 dB or more, the laminated glass 10 can be evaluated to be superior in sound insulating property.

The use of the laminated glass 10 is not particularly limited. The laminated glass 10 can be used for a building, an automobile and the like, and can attain a prominent sound insulating effect when it is used for an automobile. Further, the reduction in weight can be attained in a preferable aspect.

Note that the laminated glass, when used for an automobile, preferably has a visible light transmittance measured according to JIS R3212 (1998) of 70% or more, and more preferably 74% or more. A Tts (Total solar energy transmitted through a glazing) measured according to ISO13837-2008 is preferably 66% or less, and more preferably 60% or less.

The laminated glass 10 can be manufactured by a publicly-known method. More specifically, the intermediate film 13 is arranged between the pair of glass plates 11 and 12 to form a precursor, and the precursor is inserted into a vacuum bag such as a rubber bag. Then, heating is performed to 70 to 110°C while pressure is being reduced, thereby bonding the pair of glass plates 11 and 12 by the intermediate film 13. Thereafter, heating and pressurizing is performed as a compression bonding treatment as needed. The compression bonding treatment can further improve the durability.

### (Second embodiment)

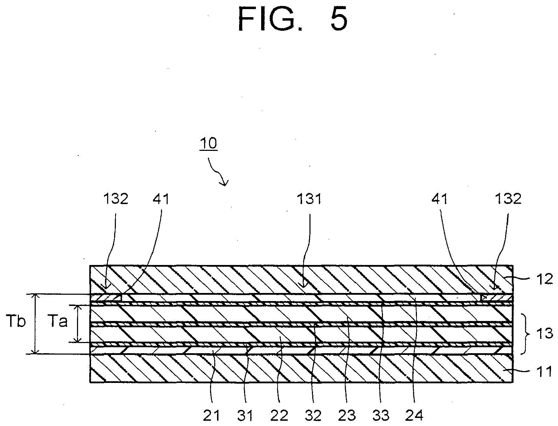

Fig. 5 is a cross-sectional view illustrating laminated glass 10 in a second embodiment. A transmitting region 131 may have seven layers of a skin layer 21, a core layer 31, a skin layer 22, a core layer 32, a skin layer 23, a core layer 33, and a skin layer 24 laminated in order from a glass plate 11 side. Here, the configurations of the layers can be the same as those of the laminated glass 10 illustrated in Fig. 1 and Fig. 2 except that the number of layers is different.

In this case, the thickness (Ta) is the thickness between the core layers 31 and 33, specifically, the total thickness of the skin layer 22, the core layer 32, and the skin layer 23. The thickness (Ta) is preferably 0.45 mm or more, and more preferably 0.50 mm or more. The thickness (Ta) is preferably 4.0 mm or less, and more preferably 3.0 mm or less.

Besides, the surface density (p) is the surface density of whole layers arranged between the core layers 31 and 33, specifically, the surface density of whole layers composed of the skin layer 22, the core layer 32, and the skin layer 23. The surface density (p) is preferably 0.5 kg/m² or more, and more preferably 0.55 kg/m² or more, and furthermore preferably 0.6 kg/m² or more. Further, the surface density (p) is preferably 3.3 kg/m² or less, more preferably 2.0 kg/m² or less, and furthermore preferably 1.3 kg/m² or less.

A shielding region 132, for example, can be made such that the skin layer 24 in the transmitting region 131 is replaced with a colored layer 41 and the other portion is made to be the same as the transmitting region 131. Note that the layer to be replaced with the colored layer 41 in the shielding region 132 among the layers constituting the transmitting region 131 is not limited to the skin layer 24. The layer to be replaced with the colored layer 41 may be any of the layers in the transmitting region 131. Besides, the layer to be replaced with the colored layer 41 may be a part or all of the layers in the transmitting region 131. The configuration of the colored layer 41 can be the same as that of the colored layer 41 in the laminated glass 10 illustrated in Fig. 1 and Fig. 2.

The characteristics of the laminated glass 10 are preferably the same as those of the laminated glass 10 in the first embodiment. More specifically, the characteristics of the laminated glass 10 are preferably the same as those of the laminated glass 10 in the first embodiment irrespective of the number of layers in the transmitting region 131.

More specifically, the surface density of the laminated glass 10 is preferably 13.5 kg/m² or less, more preferably 12 kg/m² or less, and furthermore preferably 11 kg/m² or less. The surface density of the laminated glass 10 is preferably 8 kg/m² or more, and more preferably 9 kg/m² or more from the viewpoint of keeping the desired strength.

The visible light transmittance of a portion where the shielding region 132 is provided, namely, the visible light transmittance of a portion of the pair of glass plates 11 and 12 combined with the shielding region 132 of the intermediate film 13 is preferably 3% or less. With the visible light transmittance of 3% or less in this portion, when the laminated glass 10 is used, for example, as automobile window glass, the deterioration of parts arranged inside the vehicle due to ultraviolet is suppressed, and the parts arranged inside the vehicle are made invisible, leading to improved design.

The loss factor at the primary resonance point of the laminated glass 10 is preferably 0.4 or more. When the loss factor at the primary resonance point is 0.4 or more, it is possible to sufficiently insulate, for example, sound in a relatively low frequency domain, such as engine sound of an automobile, vibration sound of tires and the like. The loss factor at the primary resonance point is more preferably 0.42 or more, and further more preferably 0.45 or more. Further, both of the loss factors at the primary resonance point and at the secondary resonance point are preferably 0.5 or more.

The three point bend rigidity of the laminated glass 10 is preferably 100 N/mm or more, and more preferably 120 N/mm or more. The sound transmission loss of the laminated glass 10 is preferably 35 dB or more, and more preferably 42 dB or more. When the sound transmission loss is 35 dB or more, the laminated glass 10 can be evaluated to be superior in sound insulating property.

### (Third embodiment)

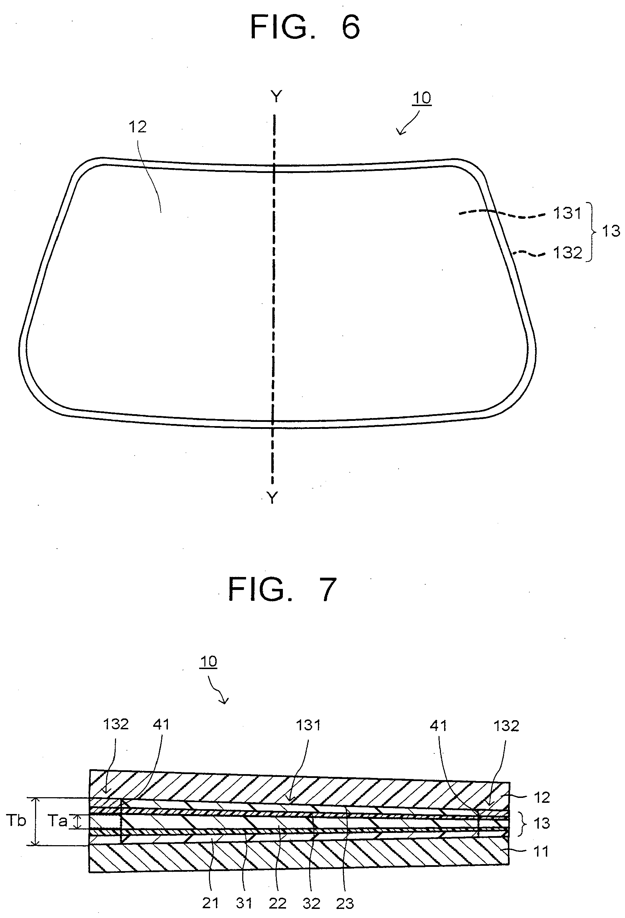

Fig. 6 is a front view of laminated glass 10 in a third embodiment, and Fig. 7 is a cross-sectional view taken along a line Y-Y of the laminated glass illustrated in Fig. 6.

The laminated glass 10 may vary in thickness in a plane direction as illustrated in the drawing. In this case, the thicknesses of layers, the thickness (Ta), the thickness (Tb) in a transmitting region 131 have the largest values measured in the plane direction in this region. In other words, the largest values only need to fall within the already-described ranges.

The illustrated laminated glass 10 is used, for example, as a windshield of an automobile. In Fig. 6, the upper side is attached to the automobile as the upper side of the windshield. Hereinafter, the upper side of the windshield is referred to as an upper edge, and the lower side is referred to as a lower edge. In Fig. 7, the left side is the upper edge side, and the right side is the lower edge side.

The laminated glass 10 has a shape of a substantially trapezoid having a lower edge longer than an upper edge. An intermediate film 13 has a so-called wedge shape gradually reduced in thickness from the upper edge toward the lower edge. Note that the intermediate film 13 has a five-layer structure in which a skin layer 21, a core layer 31, a skin layer 22, a core layer 32, and a skin layer 23 are laminated in order from a glass plate 11 side.

Each of the layers of the intermediate film 13 is gradually reduced in thickness at the same rate from the upper edge toward the lower edge. Accordingly, in such a case, the thicknesses of the layers, the thickness (Ta), the thickness (Tb) in the transmitting region 131 are measured at the upper edge side in this region.

### EXAMPLES

Hereinafter, the present invention will be described in more detail using examples. Note that the present invention is not limited to the examples described below.

### [Example 1]

As the intermediate film, the one having the transmitting region and the shielding region having a visible light transmittance of 3% or less was prepared. Note that the shielding region was formed in a frame shape surrounding the transmitting region.

The transmitting region was made to have a first skin layer (thickness of 0.33 mm, a first layer), a first core layer (thickness of 0.1 mm, a second layer), a second skin layer (thickness of 0.66 mm, a third layer), a second core layer (thickness of 0.1 mm, a fourth layer), a third skin layer (thickness of 0.66 mm, a fifth layer), a third core layer (thickness of 0.1 mm, a sixth layer), a fourth skin layer (thickness of 0.33 mm, a seventh layer) in this order from the vehicle exterior side. Here, the thickness (Ta) is 1.42 mm, the surface density (p) is 1.56 kg/m², and the thickness (Tb) is 2.28 mm.

Note that the compositions of the skin layers are the same, and each of them is composed of PVB (Tgs; 30°C). Besides, the compositions of the core layers are the same, and each of them is composed of PVB (Tgc; 3°C). The skin layers and the core layers were each formed by laminating resin sheets made of PVB.

The shielding region was made in the same laminated structure as that of the transmitting region except that the seventh layer was changed to a colored layer (thickness of 0.33 mm). The colored layer was made to contain PVB (Tgs; 30°C) and a coloring agent. As the coloring agent, carbon black was used. The content of the coloring agent was 0.1 mass% in the total of PVB and the coloring agent.

Note that the intermediate film was fabricated as follows. First, resin sheets having a size continuing in both of the transmitting region and the shielding region were laminated to form layers from the first layer to the sixth layer in the transmitting region and the shielding region. Thereafter, a resin sheet being the seventh layer in the transmitting region was laminated on the sixth layer in the transmitting region. Here, the resin sheet being the seventh layer in the transmitting region was made into a size for forming only the seventh layer in the transmitting region. Further, a resin sheet being the seventh layer (colored layer) in the shielding region was laminated. Here, the resin sheet being the seventh layer (colored layer) in the shielding region was made in a frame shape surrounding the seventh layer in the transmitting region. Further, the seventh layer in the transmitting region and the seventh layer (colored layer) in the shielding region were made to be in contact with each other. Thereafter, pressing was performed using a hot press forming machine to manufacture the intermediate film. The press conditions were 150°C, 300 seconds, and a pressing pressure of 50 kg/cm². Note that the thickness of each of the above-described layers is the thickness after the pressing.

Next, the intermediate film was arranged between a glass plate (thickness of 2.0 mm) on the vehicle exterior side and a glass plate (thickness of 1.3 mm) on the vehicle interior side to form a laminate. Each of the glass plates on the vehicle exterior side and the vehicle interior side was made of soda lime glass and formed into a size of 25 mm × 300 mm. Further, the intermediate film was formed into the same size as those of the glass plates in advance.

Thereafter, the laminate was put in a vacuum bag and subjected to compression bonding by heating to 110°C while deaeration was being performed to bring the inside of the vacuum bag into a pressure reduction degree of -60 kPa or less. Further, compression bonding was performed under conditions of a temperature of 140°C and a pressure of 1.3 MPa. Thus, laminated glass in which an intermediate film having a transmitting region and a shielding region was sandwiched between a pair of glass plates was manufactured. Note that the surface density of this laminated glass was 10.76 kg/m² and the film ratio was 23.3 mass%.

### [Comparative Example 1]

Laminated glass was manufactured similarly to Example 1 except that an intermediate film having, as a whole, the same laminated structure as that of the transmitting region in Example 1, namely, an intermediate film composed of only the transmitting region was used as the intermediate film and a ceramic shielding layer was provided on the surface of the glass plate to be located on the vehicle exterior side.

Note that the ceramic shielding layer was formed by applying and baking a ceramic paste to the glass plate to be located on the vehicle exterior side. For the ceramic paste, a pigment and a glass frit were used and applied by screen printing to a portion corresponding to the shielding region in Example 1. Further, the baking was performed under a condition of 800°C.

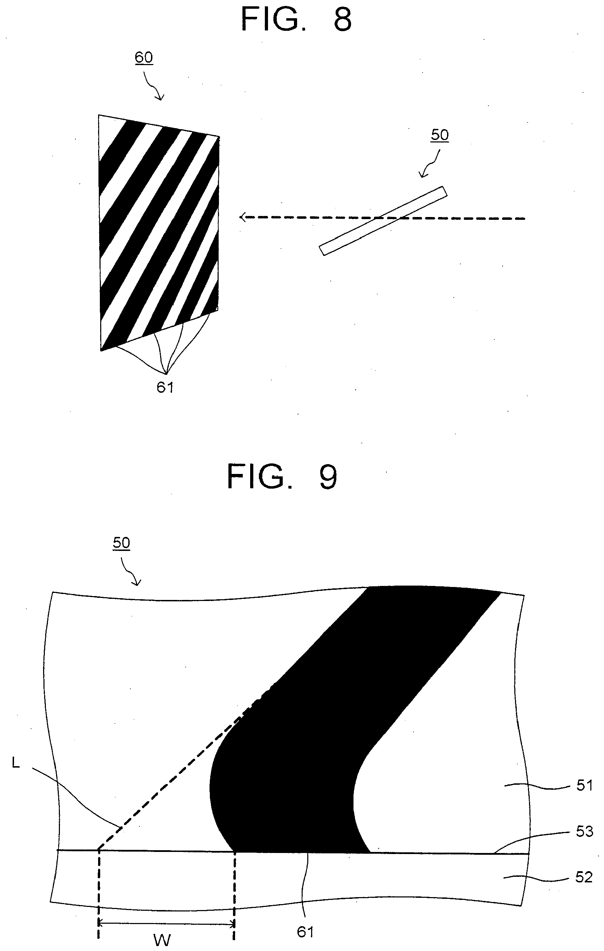

Next, the distortion of a transmitted image was evaluated as follows regarding the laminated glasses in Example 1 and Comparative Example 1. First, as illustrated in Fig. 8, laminated glass 50 was arranged inclined at the same angle as that when the laminated glass 50 was attached to an automobile, and a zebra pattern 60 was arranged on the vehicle exterior side. The zebra pattern 60 is made by providing a plurality black lines 61 on a white background. The black lines 61 were provided at an angle of 45 degrees with respect to the lower edge of the zebra pattern 60 and parallel to one another.

Fig. 9 illustrates an example of the zebra pattern 60 viewed from the vehicle interior side of the laminated glass 50. Note that Fig. 9 illustrates the state where distortion occurred in the zebra pattern 60. Here, the laminated glass 50 has a transmitting part 51 and a shielding part 52. The transmitting part 51 is a portion where the transmitting region of the intermediate film is located in the case of Example 1 and is a portion where the ceramic shielding layer is not provided in the case of Comparative Example 1. On the other hand, the shielding part 52 is a portion where the shielding region of the intermediate film is located in the case of Example 1 and is a portion where the ceramic shielding layer is provided in the case of Comparative Example 1.

Normally, as illustrated in the drawing, the black line 61 of the zebra pattern 60 is viewed distorted to curve near a boundary 53 between the transmitting part 51 and the shielding part 52. Therefore, the distance between a position where an extension line L obtained by extending the left edge of the black line 61 intersected with the boundary 53 and a position where the black line 61 actually intersected with the boundary 53 was evaluated as distortion (W).

As a result, in the laminated glass in Comparative Example 1, the distortion (W) was recognized to be as large as 7 mm. On the other hand, in the laminated glass in Example 1, the distortion (W) was recognized to be suppressed to 0(zero) mm, namely, the black line 61 was viewed as a straight line without distortion. Such a difference is considered to be caused from baking when forming the ceramic shielding layer. The occurrence of distortion was considered to be suppressed because of no need to bake the laminated glass in Example 1.

Next, evaluation of the sound insulating property and rigidity was performed as follows regarding the laminated glass in Example 1. Note that evaluation of the sound insulating property and rigidity was not performed regarding the laminated glass in Comparative Example 1 because it was considered that there was no large difference from the laminated glass in Example 1 in sound insulating property and rigidity in terms of structure.

As the evaluation of sound insulating property, the loss factors at the primary resonance point to the seventh resonance point at a frequency of 0 to 10000 Hz and a temperature of 20°C were measured in compliance with ISO_PAS_16940 using central exciting method measurement systems (MA-5500, DS-2000) manufactured by ONO SOKKI Co., Ltd. As a result, the loss factor at the primary resonance point was 0.47 and the loss factor at the secondary resonance point was 0.49, and therefore excellent sound insulating property was recognized.

As the evaluation of rigidity, the moduluses at the primary resonance point to the seventh resonance point at a frequency of 0 to 10000 Hz and a temperature of 20°C were measured. As a result, the modulus at the primary resonance point was 2.58 and the modulus at the secondary resonance point was 1.61, and therefore excellent rigidity was recognized.

### EXPLANATION OF REFERENCE SIGNS

10 ... laminated glass; 11, 12 ... glass plate; 13 ... intermediate film; 21, 22, 23, 24 ... skin layer; 31, 32, 33 ... core layer; 41 ... colored layer; 50 ... laminated glass; 51 ... transmitting part; 52 ... shielding part; 53 ... boundary; 60 ... zebra pattern; 61 ... black line; 131 ... transmitting region; 132 ... shielding region.

## Claims

1. A laminated glass comprising:
a pair of glass plates; and
an intermediate film sandwiched between the pair of glass plates,
wherein the intermediate film has a transmitting region and a shielding region,
the transmitting region has a skin layer having a glass transition point of 15°C or higher and a core layer having a glass transition point of lower than 15°C alternately laminated,
the number of the core layers is two or more in the transmitting region, and
the shielding region is provided at peripheries of the pair of glass plates and has a visible light transmittance of 3% or less.

2. The laminated glass according to claim 1,
wherein a ratio of a mass of the intermediate film to a total mass of the pair of glass plates and the intermediate film is 14 mass% or more.

3. The laminated glass according to claim 1 or 2,
wherein the transmitting region has skin layers in contact with the pair of glass plates, and
a thickness (Ta) between a pair of core layers closest to the pair of glass plates is 0.45 mm or more in the transmitting region.

4. The laminated glass according to any one of claims 1 to 3,
wherein the transmitting region has skin layers in contact with the pair of glass plates, and
a surface density (p) of whole layers arranged between a pair of core layers closest to the pair of glass plates is 0.5 kg/m² or more in the transmitting region.

5. The laminated glass according to any one of claims 1 to 4,
wherein the transmitting region has three or more core layers.

6. The laminated glass according to any one of claims 1 to 5,
wherein the laminated glass is for an automobile,
a thickness of a glass plate on a vehicle exterior side is 1.6 to 2.5 mm, and a thickness of a glass plate on a vehicle interior side is 0.5 to 1.6 mm.

7. The laminated glass according to any one of claims 1 to 6,
wherein a thickness (Tb) of the transmitting region is 1.53 mm or more.

8. The laminated glass according to any one of claims 1 to 7,
wherein the surface density of the laminated glass is 12 kg/m² or less.

9. The laminated glass according to any one of claims 1 to 8,
wherein a loss factor at a primary resonance point measured in a frequency domain of 0 to 10000 Hz under a condition of a temperature of 20°C is 0.4 or more.
